# EUROPEAN PATENT APPLICATION

(11) **EP 3 372 724 A1**
(43) Date of publication of application: **12.09.2018**
(21) Application number: 16861486.5
(22) Date of filing: 27.10.2016
(51) Int. Cl.: D06F 33/02, D06F 39/10

(54) **MAINTENANCE METHOD FOR WATER PURIFICATION DEVICE OF WATER-PURIFYING WASHING MACHINE AND WATER-PURIFYING WASHING MACHINE**

(30) Priority: 03.11.2015 CN 201510736350
(71) Applicant: Qingdao Haier Drum Washing Machine Co., Ltd., Qingdao, Shandong 266101 (CN)
(72) Inventor: ZHANG, Jingjing, Qingdao Shandong 266101 (CN); HAO, Shilong, Qingdao Shandong 266101 (CN); LI, Yimin, Qingdao Shandong 266101 (CN); LAO, Chunfeng, Qingdao Shandong 266101 (CN)
(74) Representative: Ziebig & Hengelhaupt Patentanwälte PartG mbB
(86) International application number: PCT/CN2016/103556
(87) International publication number: WO 2017/076218

(57) **Abstract**

A maintenance method for a water purification device of a water-purifying washing machine and a water-purifying washing machine. The washing machine comprises: a washing drum, a circulating water pipeline, a drainage pipeline, and a membrane module. The membrane module is provided with a water inlet (1), a water production outlet (4), and a sewage outlet (3); the membrane module is connected to the drainage pipeline by means of the sewage outlet (3); the membrane module is also provided with a flushing inlet (2) through which water can enter for cleaning the membrane module; and the flushing inlet (2) is communicated with the water inlet (1) of the washing machine. The maintenance method for the water purification device comprises: a water purification device receives a water-purifying command; control washing water to enter a membrane module; and the water purification device stops water purification after running for a cycle, and controls the washing water to enter the membrane module. The technical solution resolves the problem of cleaning of a filtration membrane module in the existing water-purifying washing machine; and furthermore, a cleaning method of the filtration membrane module is simplified, water used for cleaning the filtration membrane module is saved, and the production costs of the water-purifying washing machine are lowered.

## Description

### TECHNICAL FIELD

The present disclosure relates to washing machines, especially relates to a maintenance method for water purification device of water-purifying washing machine and the water-purifying washing machine

### BACKGROUND

The working process of existing washing machine usually includes water inflow, washing-drying-drainage, multiple rinsing-drying-drainage, etc. In the working process, the waste water is generally discharged directly out of the washing machine, and large quantities water is re-injected to rinse clothes several times, resulting in a larger water consumption throughout the laundry process.

In order to achieve the purpose of water-saving, the prior art proposes to use the filtration membrane module to purify and recycle the used washing water, for example, to recycle and reuse the washing water that discharged after the finished rinsing process and so on. However, the filtration membrane module for circulation filtration of washing water may be blocked after using for a period of time; thus, the reliable operation of the filtration membrane module may be affected and the filtering effect of the washing water may be reduced. Meanwhile, due to the non-timely cleaning of the filtration membrane module, the long-term residue of the dirt will cause difficulties in the cleaning of the filtration membrane module, which is not conducive to prolong the service life of the filter module.

Therefore, in the prior art, methods are proposed to clean the filtration membrane module. Chinese Patent Application No. 201310320243.9 discloses a method for cleaning and maintaining a filtration membrane module by using washing liquid and air washing, and the method achieves the purpose of cleaning dirt blocked on the filtration membrane of the filtration membrane module. In this method, the filtration membrane module is air-cleaned on the basis of the washing liquid cleaning of filtration membrane module, so as to save the water used to clean the filtration membrane module. However, the method for cleaning the filtration membrane module is complex and the washing machine adopting the washing method has a high production cost.

The present disclosure is proposed in view of the above.

### SUMMARY OF THE DISCLOSURE

The technical problem to be solved by the present disclosure is to overcome the deficiencies of the prior art and to provide a maintenance method for a water purification device of a water-purifying washing machine and a water-purifying washing machine, which solves the problem of cleaning the filtration membrane module in the existing water-purifying washing machine. At the same time it simplifies the cleaning method of the filtration membrane module, save water for cleaning filteration membrane module, and reduces the production cost of water-purifying washing machines.

In order to solve the above technical problem, the basic idea of the technical solution in the present disclosure is as follows:
A maintenance method for a water purification device of a water-purifying washing machine, comprises the following steps: a cleaning command being received by a water purification device , and suspending water purification; controlling washing water to enter a membrane module, and firstly performing a cleaning of the membrane module; and the water purification device continuing purifying water and stopping purifying water after the water purification device operating for one cycle, and washing water being controlled to enter the membrane module to secondly perform the cleaning of the membrane module; wherein a preset time of the two cleanings of the membrane module is related to a time which the water purification device operates for one cycle.

Further, obtaining a membrane flux during a process of water purification of the purification device; when the membrane flux of the membrane module is lower than a preset value, the water purification device receiving the cleaning command and the water purification being suspended; communicating a water inlet of the washing machine with the membrane module, controlling the washing water to enter the membrane module to firstly perform the cleaning of the membrane module.

Further, a preset time for firstly cleaning the membrane module is a first time, a preset time for secondly cleaning the membrane module is a second time, the first time and the second time are set based on a third time during which the water purification device operates for one cycle; the first time is greater than or equal to the second time.

Futher, a relationship between the first time and the third time is that the third time is equal to 40 times of the first time; a relationship between the second time and the third time is that the third time is equal to 80 times of the second time.

Further, on premise of satisfing for purifying water, the third time is set according to the membrane flux of the membrane module and a water intake of the washing machine.

Further, before the water purification device performs the water purification, a turbidity of the washing water is firstly detected; when the turbidity is greater than a preset value, the washing water is replaced; the preset value of the turbidity is to ensure that the membrane module is not blocked more than two times during one cycle of operation of the water purification device operates.

A wahsing machine adopting the above maintenance method for a water purification device of a water-purifying washing machine, comprising a washing drum, a circulating water pipeline, a drainage pipeline, and a membrane module. The membrane module is provided with a water inlet, a water production outlet, and a sewage outlet; the membrane module is connected to the circulating water pipeline by the water inlet and the water production outlet; the membrane module is connected to the drainage pipeline by the sewage outlet. The membrane module is further provided with a flushing inlet for inflowing water to clean the membrane module, and the flushing inlet is communicated with a water inlet of the washing machine.

Further, a flow rate monitoring device for automatically detecting a membrane flux of the membrane module is provided at the water production outlet of the membrane module.

Further, a turbidity detecting device for detecting a turbidity of the washing water is further included.

Further, a control device is further included, the control device is used to receive data of the membrane flux and the turbidity of the washing water, and to control the washing water to enter the membrane module from the water inlet of the washing drum.

The maintenance method of the water purification device of the water-purifying washing machine of the present disclosure is as follows, the water purification device receives a cleaning command and suspends the water purification, controls the washing water to enter the membrane module and performs the cleaning of the membrane module for the first time, and after the first cleaning is finished, the purification device continues water purification. After the water purification device operates for one cycle, the water purification is stopped, cleaning water is controlled the to enter the membrane module, and the cleaning of the membrane module is performed for the second time. Wherein, the preset time of two cleanings of the membrane module is related to a time during which the water purification device operates one cycle. Further, the membrane flux of the membrane module is detected during the water purification process; when the membrane flux decreases to a preset value, the membrane module stops filtration and water purification, and the cleaning water for cleaning the membrane module enter the membrane module from the flushing inlet provided on the membrane module to clean the dirt filtered on the membrane module. In the method for maintaining the water purification device of the water-purfying washing machine of the present disclosure, the membrane module of the water purification device is cleaned twice in one cycle operation of the water purification device, wherein the preset time of cleaning of the membrane module for the first time is longer than the preset time of cleaning of the membrane module for the second time cleaning. After the above technical solution is adopted, the present disclosure has the following beneficial effects compared with the prior art:
Membrane flux is detected during the water purification, when the membrane flux is reduced to a preset value or the water purification device is operated for one cycle, the membrane module is cleaned, so that the membrane module can be cleaned timely and the blockage of the membrane module after running for a period of time can be avoided. It enables the membrane module to operate reliably and improves the filtering effect of the washing water, meanwhile, difficulties in cleaning the membrane module caused by the residue of the water purification is avoided.

From the beginning of the operation of the water purification device to the first cleaning of the membrane module, the membrane module filters more dirt of the washing machine during this time period, and as the filtering time increases, the dirt in the washing water gradually decreases. Therefore, The preset time of cleaning of the membrane module for the first time is longer than the preset cleaning time of cleaning of the membrane module after the water purification device operates for one cycle, so as to fully washes the dirt on the membrane module, to more effectively maintain the performance of the membrane module, and to avoid wastage of water resources and use less water while achieving cleaning of the membrane modules. Since the flushing inlet of the membrane module is a specific flushing inlet instead of being shared with the water production outlet, the membrane module can be rinsed more fully, it can be cleaned better with less water, and the water for cleaning the membrane module can be further saved.

No air cleaning is performed during the cleaning of the membrane module, the complexed method of cleaning of the filtration membrane module is simplified, and the production cost of the washing machine adopting the method is reduced.

The specific embodiments of the present disclosure are described in further detail below with reference to the accompanying drawings.

### BRIEF DESCRIPTION OF THE DRAWINGS

Fig.1 is a flow chart of a maintenance method for water purification device of a water-purifying washing machine provided by an embodiment of the present disclosure;
Fig.2 is a flow chart of the maintenance method for water purification device of the water-purifying washing machine provided by embodiment 1 of the present disclosure;

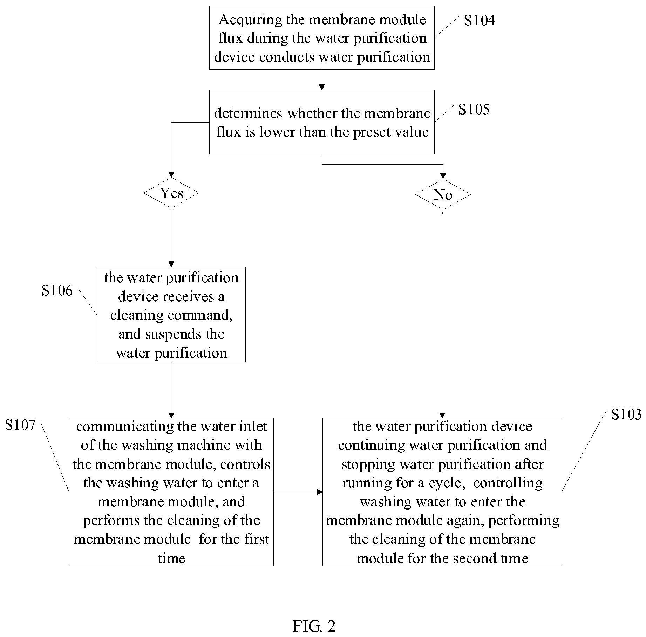

Fig.2 is a flow chart of the maintenance method for water purification device of the water-purifying washing machine provided by the embodiment 1 of the present disclosure;

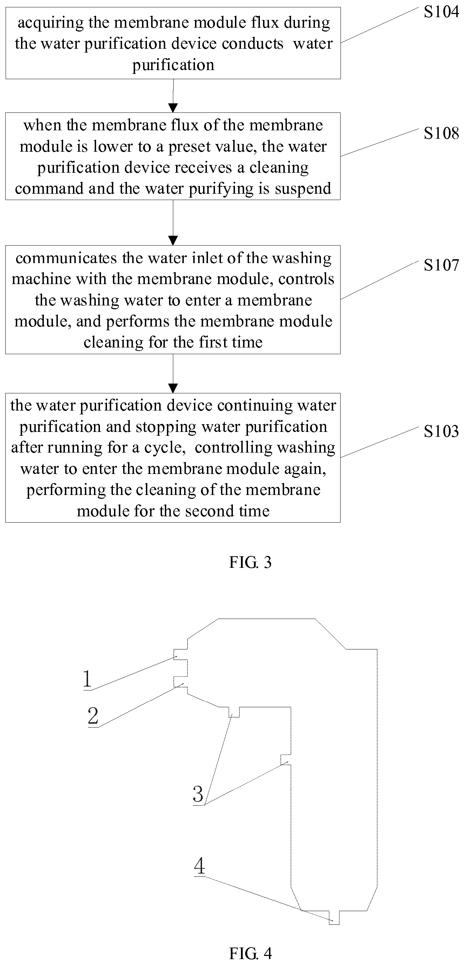

Fig. 4 is a schematic structural view of a membrane module of the water purification device of the water-purifying washing machine provided by an embodiment of the present disclosure.

In figure: 1. a water inlet, 2. a flushing inlet, 3. a sewage outlet, 4. a water production outlet.

### DETAILED DESCRIPTION OF THE EMBODIMENTS

To make the objectives, technical solutions, and advantages of the embodiments of the present disclosure more comprehensible, the technical solutions in the embodiments are described clearly and completely below in conjunction with the accompanying drawings of the present disclosure. The following embodiments are used to illustrate the present disclosure, but not to limit the scope of the present disclosure.

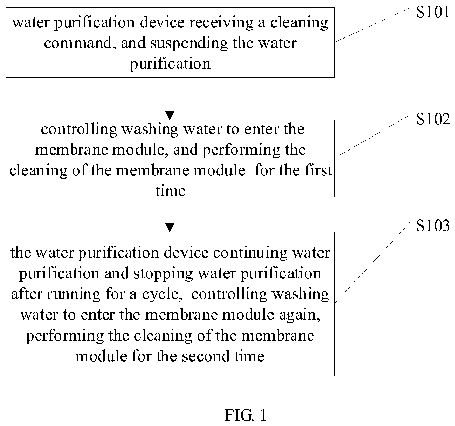

As shown in Fig. 1, a method for maintenance a water purification device of a water-purifying washing machine provided by an embodiment of the present disclosure comprises:
Step S101, a water purification device receiving a cleaning command, and suspending the water purification;
Step S102, controlling washing water to enter a membrane module, and performing the membrane module cleaning for the first time; suspending the filtration of the membrane module, controlling washing water to enter the membrane module, cleaning the dirt on the filter membrane of the membrane module;
Step S103, the water purification device keeping water-purifying and stopping water purification after running for a cycle, suspending the filtration of the membrane module, ; controlling washing water to enter the membrane module again, performing the membrane module cleaning for the second time, cleaning the dirt on the filter membrane of the membrane module again.

During a cycle of the operation of the water purification device, as the membrane module filters the washing water, the more dirt accumulates on the membrane module; the longer the filtration time, the more likely the membrane module is blocked. In the maintenance method above, the membrane module is also cleaned in the process of water purification on the basis that the membrane module is cleaned after one cycle of the water purification device is operated. So that the membrane module can be cleaned in time to avoid excessive dirt accumulated on the membrane module during the water purification process and even blockages, which can effectively maintain the performance of the membrane module.

Wherein, the durations of a preset first time that the membrane module is cleaned for the first time and a preset second time that the membrane module is cleaned for the second time after the water purification device runs for a cycle are set according to the duration of a third time that the water purification device operates for one cycle.

It should be noted that one operation cycle of the above-mentioned water purification device means that the fixed water-purifying time of the membrane module of the water-purifying washing machine is referred to as one operation cycle of the water purification device, and the fixed circulating water-purifying time of the membrane module is calculated based on the flux of the membrane module and water inflow of the washig machine that statisfies the requiresments for the water-purifying washing.

### Embodiment 1

As shown in Fig. 2, on the basis of the above embodiment, a maintenance method for water purification device of a water-purifying washing machine according to the embodiment 1 of the present disclosure further includes: acquiring the membrane flux of the membrane module when the water purification device is water-purifying; when the membrane flux of the membrane module is lower than a preset value, the water purification device receives a cleaning command to suspend water purification. Step S106, communicating the water inlet of the washing machine and the membrane module to control the flow of the cleaning water to enter the membrane module to perform the cleaning of membrane module for the first time.

The maintenance method for water purification device of water-purifying washing machine of the present embodiment:
First, executing step 104, acquiring the membrane flux of the membrane module when the water purification device conducting water purification;
As follows, executing step 105, determining whether the membrane flux is lower than the preset value.

If yes, executing step 106, the water purification device receiving a cleaning command, and suspending the water purification.

Then executing step 107, communicating the water inlet of the washing machine with the membrane module, controlling the washing water to enter the membrane module, and performing the cleaning of membrane module for the first time.

If no, executing step 103, the water purification device continuing water-purifying and stopping water purification after the water purification running for a cycle, controlling the washing water to enter the membrane module and performing the cleaning of membrane module for the second time.

As shown in Fig. 3, as a further preferred embodiment of the embodiment 1 of the present disclosure, the maintenance method for the water purification device of the water-purifying washing machine specifically is:
First, executing step 104, acquiring the membrane flux of the membrane module when the water purification device conducting water purification; as follows, executing step 108, when the membrane flux of the membrane module is lowering to a preset value, the water purification device receiving a cleaning command and the water-purifying is suspended; then executing step 107, communicating the water inlet of the washing machine with the membrane module, controlling the washing water to enter a membrane module, and performing the cleaning of membrane module for the first time; and follows by executing step 103, and the water purification device continuing water purification and stopping water purification after the purification device running for a cycle, and controlling the washing water to enter the membrane module to perform the cleaning of membrane module for the second time.

Further, the membrane flux of the membrane module is automatically detected and obtained when the water purification device conducts water-purifying, and a membrane flux value is preset. As the water purification proceeds, the dirt accumulated on the membrane module increases and the flux of the membrane module gradually decreases, when the membrane flux of the membrane module is automatically detected to decrease to the preset membrane flux value, the time is recorded as time point A. At this time, the water purification is suspended, the membrane module is cleaned for the first time, sets the preset time for cleaning the membrane module for the first time as the first time, the first time is shown as t_{A}. After cleaning, the membrane module is operating again, the water purification device continues purifying water, the time when membrane module runs for one cycle is denoted time point B. At this time, stop water purification is stopped, the membrane module is cleaned for the second time, sets the preset time for cleaning the membrane module for the second time as the seocnd time, and the second time is shown as t_{B}. Time point A, as a dividing line, divides the membrane module operation cycle into two operating periods. Wherein, the membrane flux at time point A is the lowest in the first operating period of water purification, and the membrane flux at time point B is the lowest in the second period of water purification. Preferably, sets the membrane flux at time point A less than or equal to that at time point B to ensure the membrane module to be cleaned timely; thus, it prevents the membrane module from blocking due to dirt accumulation, and affecting the water purification effect of the water purification device.

Further, in the above method, the membrane flux of the membrane module is automatically detected and obtained when the water purification device is conducting water purification and presets a membrane flux value. Alternatively, when the purification device is conducting water purification, the flow rate at the water outlet of the membrane module of the membrane module is automatically detected and acquired, and presets a flow rate value. When the water flow rate is automatically detected to decrease to the preset water flow rate value, it is recorded as time point A. At this time, the circulation filtration is suspended and the cleaning of the membrane module is performed.

Further, in the above method, a turbidity value of the washing water is preset, and the preset turbidity value is to ensure that the membrane module is not blocked more than two times during one cycle of operation of the the water purification device. Preferably, the preset turbidity value of is to ensure that the membrane flux of the membrane module will not be lower than the membrane flux at time point A for more than two times during one cycle of the operation of the water purification device. After the washing process is completed, the turbidity of the washing water is detected, when the turbidity is greater than the preset value, the washing water is changed, and the above method further enables the membrane module to be sufficiently cleaned.

### Embodiment 2

As shown in Fig. 1-3, as a further preferred embodiment of the present disclosure, based on the above embodiment, the first time t_{A} is greater than or equal to the second time t_{B}. Preferably, the relationship between t_{A} and t_{B} is: t_{A} = 2t_{B}, because in the first period of the water purification process before the time point A, the membrane module filters more dirt form the washing water, and as the filtration proceeds, the dirt in the washing water is gradually filtered and reduced, so the dirt accumulation on the membrane module mainly occurred on the first period of the water purification process before the time point A, so the t_{A} is set for a longer time, which can fully flush away the dirt on the membrane module and more effectively maintain the performance of the membrane module. On the other hand, the shorter preset duration of t_{B} can effectively avoid the waste of water resources and use less water while achieving the effect of cleaning the membrane module.

Further, the third time of one operation cycle of the water purification device is denoted by t, t_{A} and t_{B} are set according to the time t which is the time for the water purification device to operates one cycle. Preferably, the relationship between t_{A} ,t_{B} and t is: t=40t_{A}= 80t_{B}, the above time relationship is obtained through a large number of experimental tests. The above time relationship is the most suitable time ratio for cleaning and maintenance of the membrane module, and it can save water while achieving the effect of cleaning the membrane module.

### Embodiment 3

As shown in Fig. 4, on the basis of the above embodiment, a washing machine adopting the method for maintaining a water purification device for a water-purifying washing machine is provided in the embodiment of the present disclosure which comprises: a washing drum, a circulating water pipeline, a drainage pipeline, and a membrane module. The membrane module is provided with a water inlet, a water production outlet, and a sewage outlet. The membrane module is communicated to the circulating water pipeline through the water inlet and the water production outlet; the membrane module is communicated to the drainage pipeline by the sewage outlet (not shown in the figure), wherein the membrane module is also provided with a flushing inlet, through which water can enter for cleaning the membrane module, and the flushing inlet communicates with the water inlet of the washing drum. Since the membrane module is cleaned with a specific arranged flushing inlet, the flushing inlet and the production outlet do not share the same port. This arrangement on one hand, the cleaning of the membrane module is good, and on the other hand, the membrane module is cleaned.

Further, in the washing machine of the present embodiment of the present disclosure, a flow rate monitoring device (not shown in the figures) for automatically detecting the membrane flux of the membrane module is provided at the water production outlet of the membrane module.

Further, the washing machine, in the present embodiment of the present disclosure, also includes a turbidity detecting device (not shown in the figures) for detecting the turbidity of the washing water. If the turbidity of the washing water is greater than a preset value, the washing water is directly discharged from the washing machine without passing through the membrane module.

Further, the washing machine according in the embodiment of the present disclosure further includes a control device (not shown in the figures). The control device is configured to receive data of the membrane flux and the turbidity of the washing water, when the membrane flux of the membrane module is lower than the preset value, the water purification device is controlled to suspend the water purification, and the washing water is introduced from the water inlet of the washing drum to enter the membrane module. After the water purification device operates for one cycle, the water purification device is controlled to suspend the water purification, and the washing water is controlled to enter the membrane module.

When the water purification device purifies the water, the water inlet 1 and the water production outlet 4, communicated with the circulating water pipeline, are opened, the flushing inlet 2 and the sewage outlet 3 are closed, the washing water enters the membrane module through the water inlet 1, and the membrane module filters the washing water. The filtered washing water enters the washing drum through the water production outlet 4. When the water purification device receives the cleaning command, water purification is suspended, and the water inlet 1 and the water production outlet 4 are closed, then the flushing inlet 2 and the sewage outlet 3 are opened, the water inlet of the washing machine and the flushing inlet 2 are communicated, and the clean washing water is controlled to enter the membrane module and clean the membrane module. The dirt from cleaning is discharged from the sewage outlet 3 which is connected to the drainage pipeline. After the cleaning of the membrane module is completed, the water inlet 1 and the water production outlet 4 are opened, and the flushing inlet 2 and the sewage outlet 3 are closed.

The maintenance method for a water purification device of the water-purifying washing machine in the present disclosure is as follows: the water purification device receives a water purification command; the membrane module is started to filter the washing water, and the membrane flux of the membrane module is detected during the purification process; when the membrane flux is reduced to the preset value, the membrane module suspends filtering, and the water purification is stopped. The cleaning water for cleaning the membrane module enters the membrane module through the flushing inlet to clean the dirt filtered by the membrane of the membrane module. The time for cleaning the membrane module with water is preset according to the time during which the water purification device operates for one cycle. After the cleaning is completed, the membrane module is started again, the washing water is filtered. After the purification device operates for one cycle, the membrane module stops filtering, and the washing water enters the membrane module again to clean the membrane module. The cleaning time is also set according to the time, during which the water purification device operates for one cycle.

The present disclosure provides a maintenance method for a water purification device of a water-purifying washing machine and a water-purifying washing machine, which timely cleans the filtration membrane module of the water-purifying washing machine, and at the same time, the cleaning method of the filtration membrane module is simplified, the water for cleaning the filtration membrane module is saved, and the production cost of the water-purifying washing machine is reduced.

It should be noted that the embodiments in the above embodiments may be further combined or replaced, and the embodiments are merely described of the preferred embodiments of the present disclosure, and do not limit the concept and scope of the present disclosure without departing from the design concept of the present disclosure. Under the premise, various changes and improvements made by professional technicians in the art to the technical solutions of the present disclosure are all within the protection scope of the present disclosure.

## Claims

1. A maintenance method for a water purification device of a water-purifying washing machine, comprises the following steps:
a cleaning command being received by a water purification device, and suspending water purification;
controlling washing water to enter a membrane module, and firstly performing a cleaning of the membrane module;
and the water purification device continuing purifying water and stopping purifying water after the water purification device operating for one cycle, and washing water being controlled to enter the membrane module to secondly perform the cleaning of the membrane module;
wherein a preset time of the two cleanings of the membrane module is related to a time for which the water purification device operates for one cycle.

2. The maintenance method for the water purification device of the water-purifying washing machine according to claim 1 further comprises the following steps:
obtaining a membrane flux during a process of water purification of the purification device;
when the membrane flux of the membrane module is lower than a preset value, the water purification device receiving the cleaning command and the water purification being suspended;
communicating a water inlet of the washing machine with the membrane module, controlling the washing water to enter the membrane module to firstly perform the cleaning of the membrane module.

3. The maintenance method for the water purification device of the water-purifying washing machine according to claim 1, wherein, a preset time for firstly cleaning the membrane module is a first time, a preset time for secondly cleaning the membrane module is a second time, the first time and the second time are set based on a third time during which the water purification device operates for one cycle; the first time is greater than or equal to the second time.

4. The maintenance method for the water purification device of the water-purifying washing machine according to claim 3, wherein, a relationship between the first time and the third time is that the third time is equal to 40 times of the first time;
a relationship between the second time and the third time is that the third time is equal to 80 times of the second time.

5. The maintenance method for the water purification device of the water-purifying washing machine according to claim 1, wherein, on premise of satisfing for purifying water, the third time is set according to the membrane flux of the membrane module and a water intake of the washing machine.

6. The maintenance method for the water purification device of the water-purifying washing machine according to claim 1, further comprises the following steps: before the water purification device performs the water purification, a turbidity of the washing water is firstly detected;
when the turbidity is greater than a preset value, the washing water is replaced; the preset value of the turbidity is to ensure that the membrane module is not blocked more than two times during one cycle of operation of the water purification device.

7. A wahsing machine adopting the method for water purification device of the water-purifying washing machine according to any one of claims 1-6 comprising, a washing drum, a circulating water pipeline, a drainage pipeline, and a membrane module; the membrane module is provided with a water inlet, a water production outlet, and a sewage outlet; the membrane module is connected to the circulating water pipeline by the water inlet and the water production outlet; the membrane module is connected to the drainage pipeline by the sewage outlet;
wherein, the membrane module is further provided with a flushing inlet for inflowing water to clean the membrane module, and the flushing inlet is communicated with a water inlet of the washing machine.

8. The washing machine according to claim 7, wherein, a flow rate monitoring device for automatically detecting a membrane flux of the membrane module is provided at the water production outlet of the membrane module.

9. The washing machine according to claim 8, wherein, a turbidity detecting device for detecting a turbidity of the washing water is further included.

10. The washing machine according to claim 9, wherein, further comprises a control device, the control device is used to receive data of the membrane flux and the turbidity of the washing water, and to control the washing water to enter the membrane module from a water inlet of the washing drum.
